# EUROPEAN PATENT SPECIFICATION

(11) **EP 4 198 327 B1**
(45) Date of publication and mention of the grant of the patent: **06.05.2026**
(21) Application number: 21215943.8
(22) Date of filing: 20.12.2021
(51) Int. Cl.: F16C 17/02, F16C 23/04, F16C 33/14

(54) **PLAIN BEARING WITH IMPROVED WEAR RESISTANCE**
GLEITLAGER MIT VERBESSERTER VERSCHLEISSFESTIGKEIT
PALIER LISSE PRÉSENTANT UNE MEILLEURE RÉSISTANCE À L'USURE

(43) Date of publication of application: 21.06.2023
(73) Proprietor: Aktiebolaget SKF, 415 50 Göteborg (SE)
(72) Inventor: Dzwonczyk, Joanna Stefania, 3401AV Ijsselstein (NL); Dennis, Grant James, Pontypridd CF38 2DD (GB); Colton, Michael Brett, Bristol BS7 0HQ (GB)
(74) Representative: Kohl, Thomas

(56) References cited:
- CA-A1- 2 847 014
- CN-A- 109 236 852
- CN-U- 208 997 175
- RU-C1- 2 748 009
- Y�REKT�RK YAKUP: "Modification of Cold-Sprayed Aluminum Coating on Nickel-Aluminum Bronze by Micro-Arc Oxidation", JOURNAL OF THERMAL SPRAY TECHNOLOGY, ASM INTERNATIONAL, MATERIALS PARK, US, vol. 30, no. 5, 14 May 2021 (2021-05-14), pages 1274 - 1283, XP037488022, ISSN: 1059-9630, [retrieved on 20210514], DOI: 10.1007/S11666-021-01209-8

## Description

The present invention generally relates to plain bearings and more precisely, to improved wear resistance of plain bearings particularly suitable for aerospace applications as for example disclosed in CN 208 997 175 U.

Typically, in self-lubricating plain bearings, hard materials such as steel, or hard coatings such as ceramics, are used coupled with a self-lubricating material. The combination results in an optimised wear and friction resistance at the interface between the inner ring and the outer ring of the plain bearing.

The self-lubricating material usually consists in a liner and is considered as a consumable material, whereas the opposing counter-surface is optimised to have none or very low wear.

In order to comply with weight reduction requirement in aerospace industry, heavy materials of plain bearings such as steel have been substituted by light alloys.

Light alloys, however, have poor tribology properties, especially when used against a composite self-lubricating liner. For example, under very low loads, aluminum alloy exhibits abrasive wear after very few oscillating cycles.

It is known to apply hard coatings by surface treatment method such as Physical Vapor Deposition (PVD) or High Velocity Oxy Fuel (HVOF) to enhance the lifetime of plain bearings made of steel, but also light alloys such as titanium.

Nevertheless, coatings obtained by HVOF or PVD techniques cannot be applied to certain light alloys as a substrate, such as aluminum, since the high process temperatures of these methods would lead to overaging the material and lead to a reduction on mechanical properties.

PVD and HVOF techniques being not suitable for aluminum light alloys, it is possible to form an electrochemically produced layer of aluminum oxide on the surface of aluminum alloy by hard anodising method. The resulting coating enables to improve the resistance to wear of the aluminum alloy.

The downside of this solution is that the wear resistance of the coated aluminum alloy remains poor as compared with coated steels.

Consequently, the present invention intends to overcome these disadvantages by providing a plain bearing having an improved wear resistance that can be obtained from light alloys such as aluminum having limited wear resistance properties.

One object of the invention is to provide a plain bearing comprising an outer ring and an inner ring each made of a metal material and comprising respectively an inner surface and an outer surface intended to cooperate with each other for the relative movement of the outer and inner rings.

According to the invention, at least the outer surface of the inner ring and/or at least the inner surface of the outer ring are provided with the plasma electrolytic oxidation coating and the metal material comprises an aluminium alloy, the major alloying element of the aluminum alloy being copper, zinc, or a combination of magnesium and silicon.

Preferably, the plain bearing further comprises a self-lubrification liner interposed between the inner surface of the outer ring and the outer surface of the inner ring. In this case, the plain bearing is a self-lubricating plain bearing.

More preferably, the self-lubricating liner may comprise a phenolic resin matrix filled with glass fibers.

According to an embodiment, the outer surface of the inner ring may be made of aluminum alloy having the outer surface coated with a plasma electrolytic oxidation coating and the outer ring may be made of an aluminum alloy material having the inner surface uncoated.

Advantageously, the plain bearing may be a spherical plain bearing. In this case, the inner surface of the outer ring is concave and the outer surface of the inner ring is convex.

Advantageously, the plain bearing may be used in an aerospace application.

A method of manufacturing a plain bearing according to the invention can comprise:
- providing an outer ring and an inner ring comprising respectively an inner surface and an outer surface intended to cooperate with each other for the relative movement of the outer and inner rings;
- forming a coating by plasma electrolytic oxidation process on the inner surface of the outer ring and/or on the outer surface of the inner ring; and
- assembling the outer ring and the inner ring.

Other advantages and features of the invention will appear from the detailed description of embodiment of the invention, which are nonlimiting example, illustrated on the appended drawing of which:

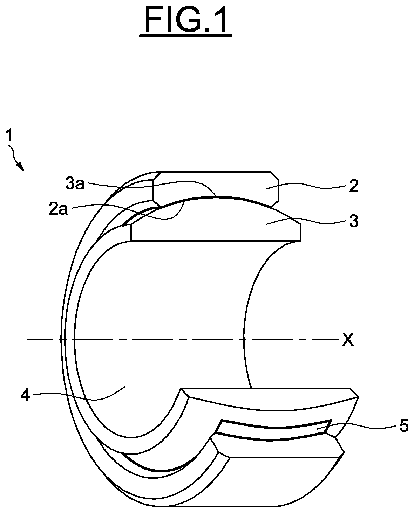

[Fig 1] illustrates a spherical plain bearing according to an embodiment of the invention.

Referring to Figure 1, a spherical plain bearing 1 of main axis X comprises an outer ring 2 concentrically positioned with respect to an inner ring 3. The exemplified plain bearing 1 is a lightweight plain bearing for aerospace applications.

The outer ring 2 has a concave bore or inner surface 2a of spherical shape, and the inner ring 3 has a convex outer surface 3a of spherical shape. The inner ring 3 also comprises a cylindrical bore 4.

The inner and outer surfaces 2a, 3a are facing each other and are of corresponding shapes to permit a relative motion between them the outer ring 2 and the inner ring 3.

In the illustrated example, the illustrated plain bearing 1 is a self-lubricating plain bearing. The plain bearing 1 comprises a self-lubricating liner 5 radially interposed between the inner surface 2a of the outer ring 2 and the outer surface 3a of the inner ring 3. The self-lubricating liner 5 reduces friction and permits a reduced wear rate during the service life of the plain bearing 1.

The liner 5 may be in form of a sheet and attached to one of the inner surface 2a of the outer ring 2 or the outer surface 3a of the inner ring 3.

In the illustrated example, the liner 5 is fixed to the inner surface 2a of the outer ring 2 and has a sliding contact surface facing the outer surface 3a of the inner ring 3. The outer ring 3 radially comes into contact against the inner ring 2 by interposition of the liner 5.

The liner 5 may comprise a composite material, for example a phenolic resin matrix filled with glass fibers.

In the illustrated example, both the inner ring 3 and the outer ring 2 are made of a metal material.

The outer surface 3a of the inner ring 3 is coated with a plasma electrolytic oxidation coating, hereinafter referred to as PEO coating.

In another embodiment, the inner surface 2a of the outer ring 2 can comprise the plasma electrolytic oxidation coating.

In another embodiment, both the outer surface 3a of the inner ring 3 and the inner surface 2a of the outer ring 2 can comprise the plasma electrolytic oxidation coating.

In order to facilitate the manufacturing process, the PEO coating can be alternatively formed on the entire surface of the inner ring 3.

The plasma electrolytic oxidation, also known as microarc oxidation, is an electrochemical surface treatment process suitable for light metal alloys that allows the formation of a protective layer of oxide at the surface of a substrate.

The process of forming a PEO coating comprises the application at room temperature of an electrical potential to the substrate, which is the outer surface 3a of the inner 3 in the illustrated example, placed in an aqueous electrolyte.

The pulsed voltage is passed through a bath of the electrolyte is applied to the substrate. The resulting plasma discharge leads to the formation of a hard and dense ceramic layer.

For example, the PEO coating is a Keronite^{®} coating.

In the illustrated embodiment, the metal material comprises an aluminum alloy.

Aluminum alloys are light alloys particularly suitable for aerospace applications.

The major alloying element of the aluminum alloy is preferably copper, or zinc, or a combination of magnesium and silicon. In particular, the aluminum-based alloys from 2/6/7xxx series may be selected.

The aluminum alloy can be, for example, AA7075 alloy, preferably AA7075 T73511.

In another embodiment, the inner ring 3 and/or the outer ring 2 can be made in a different light alloy such as, for example, titanium alloy or magnesium alloy.

The illustrated outer ring 2 is also made of aluminum alloy, for example of aluminum alloy is AA7075 alloy, preferably AA7075 T73511.

According to an embodiment, the inner ring 3 made of aluminum alloy having an outer surface 3a of the inner ring 3 coated with a PEO coating can be combined with an uncoated inner surface 2a of the outer ring 2.

The invention also concerns a method of manufacturing a plain bearing 1 comprising providing an outer ring 2 and an inner ring 3 comprising respectively an inner surface 2a and an outer surface 3b intended to cooperate with each other for the relative movement of the outer and inner rings 2, 3.

The outer and inner rings 2, 3 provided are made of metal material.

A coating is formed by plasma electrolytic oxidation process on the outer surface 3b of the inner ring 3.

According to an embodiment, the method can comprise, as an alternative, forming a PEO coating on the inner surface 2a of the outer ring 2 or on both the inner surface 2a of the outer ring 2 and the outer surface 3b of the inner ring 3.

The outer ring 2 and the inner ring 3 are then assembled.

The use of a PEO coating leads to improve the wear resistance of the inner ring 3 subjected to friction against the hard sliding contact surface of the liner 5 which may include, for example, hard and abrasive fillers particles such as glass fibers.

Therefore, the resulting self-lubricating plain bearing 1 exhibits a better mechanical resistance, an improved wear properties of the self-lubricating liner 5 and, consequently, an extended service life.

Forming a PEO coating makes it possible to manufacture a lightweight plain bearing based on light alloy suitable for aerospace with a service life at least equal to a plain bearing based on steel.

The PEO coating forms an optimized hard counter-surface which exhibits little to no wear and maintains a low wear rate of the self-lubricating liner 5 material. The wear resistance of the material combination of the PEO coating and the self-lubricating liner 5 is improved. This allows for a long-life plain bearing using light alloy, such as aluminum alloy, suitable for aerospace applications.

The use of PEO coating improves significantly the performance of the interaction between the PEO coating and the self-lubricating liner 5 compared to a coating obtained by hard anodising.

In addition, the PEO coating can additionally improve the corrosion resistance and the mechanical performance of the outer ring 2 and/or inner ring 3 where deposited.

The manufacturing method for obtaining the PEO coating is simple and complies with the thermal properties of light alloys, such as aluminum alloy, which are sensitive to high temperature process, and has minimal impact on the mechanical performance of these light alloys.

In the illustrated example, the plain bearing is a self-lubricating plain bearing provided with the liner. Alternatively, the plain bearing may not be provided with the liner. In this case, the outer ring 2 radially comes into direct contact against the inner ring 3.

In the illustrated example, the plain bearing is a radial spherical plain bearing. Alternatively, the plain bearing may be an angular contact spherical plain bearing or a thrust spherical plain bearing. In another embodiment, the plain bearing may be a cylindrical plain bearing.

## Claims

1. Plain bearing comprising an outer ring (2) and an inner ring (3) each made of a metal material and comprising respectively an inner surface (2a) and an outer surface (3b) intended to cooperate with each other for the relative movement of the outer and inner rings (2, 3), **characterized in that** at least the outer surface (3a) of the inner ring (3) is provided with a plasma electrolytic oxidation coating and/or at least the inner surface (2a) of the outer ring (2) is provided with a plasma electrolytic oxidation coating, and wherein the metal material comprises an aluminum alloy, **characterized in that** the major alloying element of the aluminum alloy is copper, zinc, or a combination of magnesium and silicon.

2. Plain bearing according to claim 1, further comprising a self-lubrification liner (5) interposed between the inner surface (2a) of the outer ring (2) and the outer surface (3b) of the inner ring (3).

3. Plain bearing according to claim 2, wherein the self-lubricating liner (5) comprises a phenolic resin matrix filled with glass fibers.

4. Plain bearing according to any of preceding claims, wherein the outer surface (3a) of the inner ring (3) is made of aluminum alloy having the outer surface (3a) coated with the plasma electrolytic oxidation coating and the outer ring (2) is made of an aluminum alloy material having the inner surface (2a) uncoated.

5. Plain bearing according to any of preceding claims, wherein the inner surface (2a) of the outer ring is concave and the outer surface (3a) of the inner ring is convex.

## Patentansprüche

1. Gleitlager umfassend einen Außenring (2) und einen Innenring (3), die jeweils aus einem Metallmaterial bestehen und eine Innenfläche (2a) bzw. eine Außenfläche (3b) umfassen, die dazu bestimmt sind, zur Relativbewegung des Außen- und des Innenrings (2, 3) miteinander zusammenzuwirken, **dadurch gekennzeichnet, dass** wenigstens die Außenfläche (3a) des Innenrings (3) mit einer plasmaelektrolytischen Oxidationsbeschichtung versehen ist und/oder wenigstens die Innenfläche (2a) des Außenrings (2) mit einer plasmaelektrolytischen Oxidationsbeschichtung versehen ist, und wobei das Metallmaterial eine Aluminiumlegierung umfasst, **dadurch gekennzeichnet, dass** das Hauptlegierungselement der Aluminiumlegierung Kupfer, Zink oder eine Kombination von Magnesium und Silicium ist.

2. Gleitlager nach Anspruch 1, ferner umfassend eine selbstschmierende Verkleidung (5), die zwischen der Innenfläche (2a) des Außenrings (2) und der Außenfläche (3b) des Innenrings (3) angeordnet ist.

3. Gleitlager nach Anspruch 2, wobei die selbstschmierende Verkleidung (5) eine mit Glasfasern gefüllte Phenolharzmatrix umfasst.

4. Gleitlager nach einem der vorstehenden Ansprüche, wobei die Außenfläche (3a) des Innenrings (3) aus einer Aluminiumlegierung besteht, wobei die Außenfläche (3a) mit der plasmaelektrolytischen Oxidationsbeschichtung beschichtet ist, und der Außenring (2) aus einem Aluminiumlegierungsmaterial besteht, wobei die Innenfläche (2a) unbeschichtet ist.

5. Gleitlager nach einem der vorstehenden Ansprüche, wobei die Innenfläche (2a) des Außenrings konkav ist und die Außenfläche (3a) des Innenrings konvex ist.

## Revendications

1. Palier lisse comprenant une bague externe (2) et une bague interne (3), chacune constituée d'un matériau métallique et comprenant respectivement une surface interne (2a) et une surface externe (3b) destinées à coopérer entre elles pour le déplacement relatif des bagues externe et interne (2, 3), **caractérisé en ce qu'**au moins la surface externe (3a) de la bague interne (3) est pourvue d'un revêtement d'oxydation électrolytique au plasma et/ou au moins la surface interne (2a) de la bague externe (2) est pourvue d'un revêtement d'oxydation électrolytique au plasma, et dans lequel le matériau métallique comprend un alliage d'aluminium, **caractérisé en ce que** le principal élément d'alliage de l'alliage d'aluminium est le cuivre, le zinc, ou une combinaison de magnésium et de silicium.

2. Palier lisse selon la revendication 1, comprenant en outre un coussinet autolubrifiant (5) intercalé entre la surface interne (2a) de la bague externe (2) et la surface externe (3b) de la bague interne (3).

3. Palier lisse selon la revendication 2, dans lequel le coussinet autolubrifiant (5) comprend une matrice de résine phénolique chargée de fibres de verre.

4. Palier lisse selon l'une quelconque des revendications précédentes, dans lequel la surface externe (3a) de la bague interne (3) est constituée d'alliage d'aluminium dont la surface externe (3a) est revêtue du revêtement d'oxydation électrolytique au plasma et la bague externe (2) est constituée d'un matériau en alliage d'aluminium dont la surface interne (2a) n'est pas revêtue.

5. Palier lisse selon l'une quelconque des revendications précédentes, dans lequel la surface interne (2a) de la bague externe est concave et la surface externe (3a) de la bague interne est convexe.
